# FASCICULE DE BREVET EUROPEEN

(11) **EP 2 523 922 B1**
(45) Date de publication et mention de la délivrance du brevet: **30.09.2020**
(21) Numéro de dépôt: 11700092.7
(22) Date de dépôt: 11.01.2011
(51) Int. Cl.: C04B 28/02, C04B 28/04, C04B 28/06, C04B 28/10, C04B 28/14

(54) **ENDUIT ISOLANT A BASE DE XEROGEL DE SILICE**
ISOLIERENDES SILICA-XEROGEL-PFLASTER
INSULATING SILICA XEROGEL PLASTER

(30) Priorité: 11.01.2010 FR 1000092
(43) Date de publication de la demande: 21.11.2012
(73) Titulaire: Sika Technology AG, 6340 Baar (CH); Association pour la Recherche et le Développement des Méthodes et Processus Industriels, 75006 Paris (FR)
(72) Inventeur: ACHARD, Patrick, F-06904 Sophia Antipolis Cedex (FR); RIGACCI, Arnaud, F-06904 Sophia Antipolis Cedex (FR); ECHANTILLAC, Thomas, F-38291 Saint Quentin Fallavier (FR); BELLET, Audrey, F-38291 Saint Quentin Fallavier (FR); AULAGNIER, Marie, F-38291 Saint Quentin Fallavier (FR); DAUBRESSE, Anne, F-38291 SaintQuentin Fallavier (FR)
(74) Mandataire: Sika Patent Attorneys
(86) Numéro de dépôt international: PCT/EP2011/050278
(87) Numéro de publication internationale: WO 2011/083174

(56) Documents cités:
- EP-A2- 1 207 081
- WO-A1-94/20274
- WO-A2-2006/032655
- DD-A5- 300 637
- DE-A1- 4 337 777
- DE-A1- 4 443 594
- DE-A1- 10 211 331
- DE-A1- 19 702 240
- DE-A1-102004 046 496
- DE-A1-102010 063 563
- DE-U1- 20 101 177
- DE-U1-202010 010 080
- JP-A- 10 152 360
- US-A- 5 641 584
- US-A- 5 948 314

## Description

### Domaine technique

Le domaine technique de l'invention est celui des enduits et mortiers extérieurs pour le bâtiment.

Plus précisément, la présente invention concerne des enduits extérieurs à base de xérogel de silice.

La préparation d'un tel enduit d'application par projection sur une surface de bâtiment et le revêtement ainsi obtenu, constituent d'autres objets de la présente invention.

Dans tout le présent exposé, tout singulier désigne indifféremment un singulier ou un pluriel.

### Art Antérieur - Problème technique

La consommation énergétique du secteur du bâtiment représente près de la moitié (46%) de la consommation énergétique en France, comme en Europe (42%). Eu égard à la conjoncture énergétique actuelle, l'ensemble des acteurs de ce secteur ont comme souci majeur de trouver des moyens pour réduire cette facture. Pour ce faire, deux leviers sont privilégiés : le rendement des systèmes de chauffage et la réduction des pertes de chaleur.

S'agissant du deuxième levier qui s'inscrit dans le cadre du présent exposé, il convient de noter que l'isolation d'un bâtiment peut se faire selon les trois principaux schémas suivants :
- système d'isolation par l'intérieur (ITI),
- système d'isolation par l'extérieur (ITE), et
- système d'isolation répartie (ITR).

Les enduits isolants selon l'invention relèvent des systèmes d'isolation ITE.

Classiquement, les enduits de façade possèdent deux principales fonctions. La première est de protéger/imperméabiliser et la deuxième de décorer l'extérieur du bâtiment.

Ces enduits extérieurs ou enduits de façade sont préparés à partir d'une composition sèche que l'on mélange avec de l'eau (gâchage) de manière à obtenir une pâte de viscosité adaptée à l'application, par exemple par projection, sur une surface extérieure de bâtiments.

La composition sèche d'un enduit extérieur comprend classiquement :
◆ un liant qui peut comprendre au moins un liant hydraulique minéral (ciment Portland ou chaux hydraulique) et/ou au moins un liant organique,
◆ une charge structurante (filler -granulométrie inférieure ou égale à 200 µmou sable calcaire, siliceux ou siliceux calcaire; charge légère type perlite ou vermiculite),
◆ et des adjuvants (rétenteurs d'eau, entraîneurs d'air, agents hydrofuges, accélérateurs de prise, retardateurs de prise, etc.).

La granulométrie du mortier permet de régler la compacité finale de l'enduit, ainsi que la viscosité ou la rhéologie de la pâte lors du gâchage. Elle détermine également l'aspect fini de l'enduit.

Dans le présent exposé, on désigne indifféremment par *"enduit"* ou *"mortier",* le mélange obtenu après gâchage avec de l'eau d'une composition sèche du type de celle visée ci-dessus.

Pour rendre un enduit extérieur isolant thermiquement, il convient de diminuer sa conductivité thermique.

Il est connu d'utiliser des charges minérales, et parfois organiques, pour diminuer la conductivité thermique des enduits extérieurs ou des bétons. Les charges minérales utilisées à cette fin sont par exemple la perlite, la pierre ponce, la diatomite, les silicates, la vermiculite, des pouzzolanes... Les charges organiques peuvent être des charges en polystyrène extrudé ou expansé.

Les problèmes rencontrés avec ces charges à vocation isolante concernent notamment leur ségrégation au sein de la pâte lors du gâchage, l'application délicate de ces pâtes en raison des caractéristiques mécaniques desdites charges, et enfin, les répercussions négatives sur les propriétés mécaniques du revêtement appliqué sur la surface extérieure du bâtiment. De plus, les charges ont l'inconvénient d'être difficilement manipulables en grandes quantités. Enfin, les conductivités thermiques atteintes pour le revêtement à base des charges isolantes connues, sont perfectibles sachant que l'objectif visé en termes de conductivité thermique λ (W.m⁻¹.K⁻¹) est : λ ≤ 0,08 et préférentiellement ≤ 0,065.

Il s'ensuit que pour l'instant, les enduits extérieurs projetables connus vont difficilement au-delà des deux fonctions essentielles que l'on attend d'eux, à savoir d'une part, la protection/imperméabilisation du bâtiment et, d'autre part, sa décoration. Des progrès restent à faire en matière d'isolation thermique, s'agissant de ces enduits.

Par ailleurs, le brevet FR-2873677-B1 divulgue un xérogel de silice peu dense et hydrophobe obtenu en traitant un organogel de silice avec un agent hydrophobant en présence d'acide et dans un solvant approprié, en séparant l'organogel hydrophobe obtenu et en éliminant le solvant de l'organogel par évaporation. Le terme *"xérogel"* désigne généralement un gel de silice qui a été séché par évaporation du solvant.

Il est à noter que les aérogels de silice se distinguent des xérogels de silice par le fait que les premiers sont des gels de silice séchés dans des conditions super-critiques, ils peuvent alors être monolithiques, tandis que les seconds sont des gels de silice séchés par évaporation de solvants, ils sont en général obtenus sous forme divisée granulaire.

Les produits de départ, à savoir les organogels de silice et leur procédé d'obtention, font partie de l'art antérieur. Ils sont produits par exemple par hydrolyse contrôlée de composés organosiliciques en solvants organiques (cf. C.J. Brinker et G.W. Scherrer, « Sol-gel Science: the physics and chemistry of Sol-gel processing », Academics, 1990). De tels xérogels qualifiés de matériaux super isolants à très faible conductivité thermique, sont utilisés pour réaliser, par exemple, des vitrages isolants. Leurs domaines d'application sont notamment le bâtiment, le transport et l'aérospatiale.

Une application connue des xérogels super isolants est celle d'isolant pour conduits à double enveloppe de puits d'extraction de fluides pétroliers par exemple pour réhabiliter des puits de forage dans le domaine de l'exploitation pétrolière. Dans cette application, on cherche à éviter le bouchage des conduits par la formation d'hydrates de gaz ou de paraffines en évitant le refroidissement des produits extraits lors de leur remontée (cf. projet français Thermogelf, par exemple).

La demande de brevet WO-99/36725-A1 enseigne l'utilisation d'aérogels de silice dans des composites isolants multi-couches utilisables comme dans des applications cryogéniques, par exemple pour l'isolation de réservoirs, de conduits, de conteneurs, etc. La demande de brevet européen EP-0884376-A concerne l'utilisation d'aérogels de silice comme matériaux de charge pour le transport et le stockage de fluides inflammables et/ou toxiques tel que l'acétylène.

Le brevet US-6,156,223-B concerne des xérogels et leur préparation, et mentionne comme application de xérogels, outre l'isolation, leur utilisation en tant que matrice pour source lumineuse radio-luminescente, ou bien encore en acoustique, en catalyse, en filtration, en physique de haute énergie, en énergie solaire et en conservation.

La demande de brevet WO 2006/032655 A2 décrit une composition comprenant de l'eau, du liant minéral hydraulique et une charge isolante comprenant un granulat d'aérogel de silice.

Dans ce contexte, le problème technique à la source de la présente invention est de satisfaire à au moins l'un des objectifs énoncés ci-après :
- fournir un enduit projetable pour revêtements extérieurs de bâtiments qui présente des propriétés d'isolation thermique améliorées, ou en d'autres termes d'ajouter une nouvelle fonction d'isolation à l'enduit sans préjudice pour sa fonction classique de protection/imperméabilisation, voire éventuellement pour sa fonction de décoration,
- fournir un enduit projetable pour revêtements extérieurs de bâtiments, simple à mettre en œuvre,
- fournir un enduit projetable répondant à au moins l'un des critères suivants :
   ∘ stabilité au stockage sous forme sèche et stabilité après gâchage,
   ∘ rétention d'eau acceptable lors du gâchage,
   ∘ consistance et viscosité de pâte permettant le pompage par une machine à projeter,
   ∘ aptitude au pompage,
   ∘ temps ouvert suffisamment long pour réaliser le gâchage et l'application d'enduits ;
- fournir un enduit projetable pour revêtements extérieurs de bâtiments qui soit facile à gâcher par les utilisateurs,
- fournir une composition sèche pour la préparation de l'enduit tel que visé ci-dessus,
- fournir un procédé de préparation de l'enduit tel que visé ci-dessus qui soit facile à mettre en œuvre et économique,
- fournir un revêtement extérieur de bâtiments par application de l'enduit susvisé, ledit revêtement ayant une conductivité thermique λ ≤ à 0,065 W.m⁻¹.K⁻¹ et/ou ayant une rétention d'eau supérieure à 80% et un temps de prise entre 5 et 20 heures,
- fournir un revêtement extérieur de bâtiments par application de l'enduit susvisé, ledit revêtement ayant de bonnes performances mécaniques (dureté, résistance à la fissuration, durabilité) et de mise en œuvre,
- fournir un revêtement extérieur mince de bâtiments assurant la décoration, par application de l'enduit susvisé ou par une couche mince de finition compatible avec l'enduit.

### Brève description de l'invention

Le problème mentionné ci-dessus est résolu par l'invention qui concerne un enduit applicable sur une surface de bâtiment pour réaliser un revêtement isolant thermiquement, cet enduit comprenant de l'eau, du liant (a), éventuellement une charge structurante (c) et éventuellement des adjuvants (d), caractérisée en ce qu'il comporte en outre une charge isolante (b) comprenant une poudre ou un granulat d'au moins un aérogel de silice et/ou d'un xérogel de silice hydrophobe (de préférence *"peu dense"*).

Il est du mérite des inventeurs d'être parvenus à formuler cet enduit nonobstant le fait que la poudre ou les granulats d'aérogel de silice et/ou de xérogel de silice hydrophobes mis en œuvre sont de faible densité et sont par conséquent très difficiles à incorporer dans des matrices cimentaires.

L'enduit selon l'invention permet de réaliser un revêtement isolant doté d'un coefficient de conductivité thermique λ faible, et ce, sans affecter les fonctions requises pour de tels produits, à savoir notamment :
- la protection/imperméabilisation du support, par exemple des façades,
- éventuellement la décoration, cette fonction de décoration étant assurée par une couche mince de finition compatible avec l'enduit ou par l'enduit lui-même si ces propriétés mécaniques et son aspect visuel le permettent,
- la préparation,
- l'application,
- la durabilité, et
- la résistance mécanique.

En particulier, l'enduit selon l'invention est doté de bonnes performances de mise en œuvre telles que "l'ouvrabilité" et des propriétés rhéologiques adaptées au pompage. *"L'ouvrabilité"* est la capacité d'un mortier à présenter un temps ouvert, c'est-à-dire un temps après gâchage durant lequel le produit est maniable. Un temps ouvert trop court correspond à une prise rapide du liant et un temps ouvert trop long peut favoriser l'apparition de certaines dégradations de l'enduit.
En outre, cet enduit présente notamment sur le plan mécanique une dureté idoine et une bonne résistance à la fissuration, durabilité.

La présente invention vise aussi un procédé de préparation de l'enduit défini précédemment, consistant essentiellement à mélanger de l'eau à un mélange prêt à l'emploi comprenant le liant (a), éventuellement tout ou partie de la charge isolante (b), la charge structurante (c), les adjuvants (dᵢ) à (dᵥᵢ), le temps de mélange étant de préférence égal à 1 à 30 min, voire 3 à 10 min, la totalité ou le reste de la charge isolante (b) étant ensuite incorporée progressivement dans le mélange si cela n'a pas été fait auparavant.

### Définitions

Les définitions données ci-après à titre d'exemples, peuvent servir de référence dans le cadre du présent exposé :
- *"peu dense", "faible densité"* pour qualifier l'aérogel ou le xérogel, signifie que sa densité "d" est comprise dans les intervalles suivants : [0 ; 0,25] préférentiellement [0,05 ; 0,12].
- *"hydrophobe"* pour qualifier l'aérogel ou le xérogel, signifie que sa reprise de masse (eau) mesurée dans un test consistant à placer une masse d'aérogel ou de xérogel de 0,1g ou 10,0g dans une atmosphère d'air dont l'HR=90% à une température de 25°C, est inférieure ou égale à 10% massique, de préférence à 5% massique.
- *"granulométrie"* correspond au Dmax en tamisage à sec.
- La granulométrie d'une *"poudre"* est inférieure ou égale à 1 mm, de préférence comprise entre 100 µm et 1 mm.
- La granulométrie d'un *"granulat"* est supérieure à 1 mm, de préférence inférieure ou égale à 10 mm.
- *"Filler"* désigne une charge poudreuse légère pour mortier, comprenant par exemple des particules siliceuses, calcaires, silico-calcaires et/ou des particules de perlite ou de vermiculite, de granulométrie inférieure ou égale à 200 µm.
- *"léger"* pour qualifier les produits utilisés dans les enduits, signifie de densité inférieure ou égale à 0,1 Kg/L.

### Description détaillée de l'invention

### L'ENDUIT

De préférence, la poudre ou le granulat est à base et/ou et constitué par au moins un xérogel de silice et hydrophobe obtenu en traitant un organogel de silice avec un agent hydrophobant en présence d'acide et dans un solvant, en séparant l'organogel hydrophobe obtenu et en éliminant le solvant de l'organogel par évaporation.

Selon un mode préféré de réalisation de l'invention, l'enduit se caractérise par le fait que sa matière sèche a la composition suivante, en % massique, dans l'ordre croissant de préférence pour chaque constituant :

| | |
|---|---|
| (a.1) Liant hydraulique minéral | [0-99]; [45-99]; [48-85]; [50-80] |
| (a.2) Liant organique | [0-99] [1-40]; [1-20]; [2-18]; [5-15] |
| *avec la condition selon laquelle au moins l'un des pourcentages massiques (a.1) & (a.2) est supérieur à 0;* | |
| (b) Charge isolante | [0,5-65];[5-60];[15-55] |
| (c) Charge structurante | [0-60];[0-50];[0-40] |
| (d) Adjuvants | |
| i. Epaississant | [0,05-2,0]; [0,1-1,5]; [0,1-1] |
| ii. Rétenteur d'eau | [0,05-2,0]; [0,1-1,0]; [0,15-0,8] |
| iii. Entraîneur d'air | [0,01-1,0]; [0,05-0,8]; [0,08-0,4] |
| iv. Retardateur de prise | [0-1,0]; [0-0,8]; [0-0,4] |
| v. Accélérateur de prise | [0-1,0]; [0-0,8]; [0-0,6] |
| vi. Fibres | [0-5,0]; [0,1-3,0]; [0,5-2,0] |

Selon une variante, le % massique de charge isolante (b) est inférieur à 50 %, de préférence compris entre 15 et 49%, et, plus préférentiellement encore, compris entre 15 et 45%.

### Taux de gâchage :

Avantageusement, l'enduit selon l'invention a une teneur en eau, exprimée par un taux de gâchage, c'est-à-dire un rapport de la masse d'eau introduite sur la masse de matière sèche du liant (a) et de la charge (b), en pourcentage, qui est, dans l'ordre croissant de préférence : [10-300]; [50-200]; [60-100].

Selon une variante, le taux de gâchage est compris entre [45-130], de préférence [50-120].
Les bornes ci-dessus sont définies par un maximum correspondant au taux au-delà duquel la pâte de liant hydraté fraîche devient une suspension et pour lequel les grains de liants sédimentent, et par minimum correspondant au taux en-deçà duquel le liant n'est pas suffisamment mouillé pour former une pâte homogène.

### Liant hydraulique minéral (a.1) :

Selon un mode préféré de réalisation de l'invention, le liant hydraulique minéral (a.1) est choisi dans le groupe comprenant: les ciments alumineux (avantageusement les ciments sulfo-alumineux et les ciments à base d'aluminates de calcium), les ciments Portland, les chaux (avantageusement les chaux aériennes et les chaux hydrauliques), les sulfates de calcium (avantageusement l'anhydrite, le gypse et le plâtre) et leurs mélanges ;
les ciments alumineux et les ciments sulfo-alumineux (avantageusement mélangés à du gypse selon un pourcentage massique compris entre 10 et 90 % par rapport au mélange) étant préférés ;
les mélanges ciments sulfo-alumineux/chaux et/ou ciments Portland et les mélanges ciments alumineux à base d'aluminates de calcium/source(s) de sulfate(s)/chaux étant particulièrement préférés.

Le ciment sulfoalumineux ayant un taux de gypsage de 25 % est particulièrement préféré pour la réalisation de la présente invention.

### Liant organique (a.1) :

Le liant organique (a.2) est plutôt choisi parmi les résines acryliques et vinyliques, de préférence les résines styrène-acrylique, acrylique, vinyl-acétate d'éthylène, vinyl-acétate/ versatate/ éthylène, et leurs mélanges.

Le liant (a.1) et/ou (a.2) selon l'invention est peu conducteur et assure une tenue mécanique importante.

### Charge isolante (b) :

De façon remarquable, le pourcentage massique de la charge isolante (b) par rapport à la matière sèche est inférieur ou égal à 60, 50 et 40 dans l'ordre croissant de préférence.

De façon avantageuse, la charge (b) est obtenue par la voie alcoxysilane à partir de tétraalcoxysilane, (de préférence tétraéthoxysilane) en milieu organique, de manière à produire un organogel traité par un agent hydrophobant choisi parmi les polyalkylsiloxanes, l'héxadiméthylsiloxane étant particulièrement préféré.

En outre, selon un mode de réalisation préféré de l'invention, la charge (b) est une poudre ou un granulat de xérogel de silice de granulométrie inférieure ou égale à 2000 µm, de préférence comprise entre 250 et 2000 µm, entre 150 et 500 µm, entre 200 et 250 µm, ou entre 0 et 125µm; et, plus préférentiellement comprise entre 150 et 500 µm.

Suivant une modalité intéressante de l'invention, le xérogel retenu a subi un traitement de surface limitant la reprise hydrique et lui donnant une certaine hydrophobicité.

De manière plus détaillée, les organogels sont obtenus par des réactions simultanées d'hydrolyse et de condensation d'un précurseur constitué par un pré-hydrolysat sous-stœchiométrique de tétraéthoxysilane en milieu organique :
Réaction d'hydrolyse :

   (RO)₃=Si-OR + H₂O -> (RO)₃≡Si-OH + ROH
Réaction de condensation H₂O :

   (RO)₃=Si-OH + HO-Si≡ (OR)₃ -> (RO)₃=Si-O- Si= (OR)₃ + H₂O
Réaction de condensation R-OH :

   (RO)₃≡Si-OR + HO-Si≡ (OR)₃ -> (RO)₃≡Si-O- Si≡ (OR)₃ + ROH

Ces réactions pouvant être catalysées en milieu basique ou en milieu acide.

Les gels ainsi obtenus sont ensuite broyés en grains millimétriques avant d'être traités par de l'hexaméthyldisiloxane, ce qui rend les gels hydrophobes par substitution de silanols de surface hydrophiles par des groupes alkyles ramifiés.

En ce qui concerne le séchage des organogels pour obtenir les xérogels utilisés comme charge de l'enduit de la présente invention, il s'agit d'un séchage évaporatif dont les conditions dépendent de la nature du solvant utilisé. Il peut s'agir notamment d'un séchage sur lit fluidisé ou en étuve industrielle.

Les avantages des charges (b) utilisées dans la présente invention sont nombreux. L'hydrophobicité de surface et la nanostructure particulière de ces charges, le tout allié à une très faible conductivité thermique les rend attractives pour l'isolation des bâtiments. De surcroît, leur forme granulaire se prête idéalement à la préparation d'enduits projetables isolants.

### Charge structurante (c) :

Suivant une modalité privilégiée de l'invention, la charge structurante (c) est choisie parmi les charges minérales, de préférence parmi les sables et/ou les fillers.
Les sables peuvent être par exemple siliceux, calcaires, silico-calcaires.

### Adjuvants (d) :

En ce qui concerne les adjuvants (d), ils ont pour rôle d'offrir une régularité des propriétés du matériau et permettent de remplir le cahier des charges précis propre à chaque enduit.

En particulier, les épaississants (dᵢ) permettent de contrôler la porosité du matériau obtenu, notamment dans les produits cimentaires légers, de faciliter l'incorporation de granulats légers et d'améliorer l'homogénéité de leur distribution volumique.

Les rétenteurs d'eau (dᵢᵢ) ont la propriété de conserver l'eau de gâchage avant la prise. L'eau est ainsi maintenue dans la pâte de mortier, ce qui lui confère une bonne adhérence. Dans une certaine mesure, elle est moins absorbée par le support, le relargage en surface est limité et on a ainsi peu d'évaporation.

Les entraîneurs d'air (dᵢᵢᵢ) sont des tensioactifs qui ont pour effet de créer un réseau de bulles d'air qui améliorent la plasticité par réduction des frottements et donnent au mortier un caractère non gélif.

Les retardateurs de prise (dᵢᵥ) et les accélérateurs de prise (dᵥ) les accélérateurs de prise (dᵥ) sont des produits solubles dans l'eau qui modifient les solubilités, les vitesses de dissolution et l'hydratation des divers constituants des liants.

De manière préférée, l'enduit de l'invention présente au moins l'une des caractéristiques suivantes :
- l'épaississant (dᵢ) est choisi parmi les polysaccharides modifiés -de préférence parmi les éthers d'amidons modifiés-, les gommes de Welan, les gommes de guar, les gommes de xanthane, les gommes succinoglycanes, les alcools polyvinyliques, les polymères polyacrylamide, les sépiolites, les bentonites, et leurs mélanges ;
- le rétenteur d'eau (dᵢᵢ) est choisi parmi : les éthers de cellulose et leurs mélanges, et de préférence dans le groupe comprenant les méthylcelluloses, les méthylhydroxypropylcelluloses, les méthylhydroxyéthylcelluloses et leurs mélanges, ou parmi les éthers de guar modifiés et leurs mélanges ;
- l'entraîneur d'air (dᵢᵢᵢ) est choisi parmi les tensioactifs et leurs mélanges, de préférence parmi les résines naturelles, les composés sulfatés ou sulfonatés, les détergents synthétiques, les acides gras organiques et leurs mélanges, plus préférentiellement parmi les lignosulfonates, les savons alcalins d'acide(s) gras et leurs mélanges, et, encore plus préférentiellement dans le groupe comprenant les oléfines sulfonates, le dodécyl-sulfate de sodium, le lauryl sulfate de sodium et leurs mélanges ;

- le retardateur de prise (dᵢᵥ) est choisi dans le groupe comprenant l'acide tartrique et ses sels, de préférence les sels de sodium ou de potassium, l'acide citrique et ses sels, de préférence les sels de sodium (citrate trisodique) et leurs mélanges ;
- l'accélérateur de prise (dᵥ) est choisi parmi les carbonates, de préférence de lithium ou de sodium et leurs mélanges ;
- les fibres (dᵥᵢ) comprennent des fibres de polyamide, de polyacrylonitrile, de polyacrylate, de cellulose, de polypropylène, de verre, de sisal, de jute, de chanvre ou de leurs mélanges.

Un autre objet de la présente invention est une composition sèche pour la préparation d'un enduit tel que défini ci-dessus, comprenant :
- un ou plusieurs composants formé(s) par tout ou partie des constituants (a), (c) et (dᵢ) à (dᵥᵢ) décrits plus bas, et
- la charge (b).

Suivant une possibilité, cette composition sèche est un mélange prêt à l'emploi comprenant :
- soit un monocomposant contenant le liant (a), la charge isolante (b), la charge structurante (c), et tout ou partie des adjuvants (dᵢ) à (dᵥᵢ),
- soit un bicomposant contenant, d'une part, le liant (a), la charge structurante (c) et tout ou partie des adjuvants (dᵢ) à (dᵥᵢ), et, d'autre part, la charge isolante (b).

### LE PROCEDE

La présente invention vise aussi un procédé de préparation de l'enduit défini précédemment.

Selon une modalité avantageuse, ce procédé peut être un gâchage en discontinu, dans lequel on mélange, dans la cuve d'une machine à projeter, de l'eau à un mélange prêt à l'emploi comprenant le liant (a), éventuellement la charge isolante (b), la charge structurante (c), les adjuvants (dᵢ) à (dᵥᵢ). Le temps de mélange est de préférence égal à 1 à 30 min, voire 3 à 10 min. La charge isolante (b) étant ensuite incorporée progressivement dans le mélange si cela n'a pas été fait auparavant.

Ce procédé est facile à mettre en œuvre par les praticiens du bâtiment.

### L'APPLICATION

Un autre objet de l'invention est l'application par projection sur une surface de bâtiment, de préférence un mur et plus particulièrement un mur de type support monomur en briques ou en béton cellulaire, de l'enduit défini précédemment. Cette application sur mur peut être réalisée aussi bien pour des bâtiments neufs que pour des bâtiments en rénovation.
L'application selon l'invention est aisée.

### LE REVETEMENT

La présente invention vise également un revêtement obtenu par la susdite application et possédant au moins l'une des propriétés suivantes :
◆ conductivité thermique λ inférieure ou égale à 0,08 W m⁻¹K⁻¹ et de préférence inférieure à 0,065 W m⁻¹K⁻¹,
◆ rétention d'eau supérieure ou égale à 80%, de préférence 90%, et
◆ temps de prise entre 5 et 20 heures, de préférence entre 10 et 14 heures, à 5°C et 30°C, après séchage.

### LES SUPPORTS

Un autre objet de l'invention consiste dans les supports revêtus à l'aide de l'enduit selon l'invention pris en tant que tels.

### EXEMPLES

### -1- Matières Premières

### (a.1) liant organique minéral :

Liant sulfoalumineux gypsé à 85 % ou à 25 %, de masse volumique 2,65 g/cm3, de surface spécifique Blaine 4000-5000 cm²/g et de D50 = 20+/- 5 µm.

### (b) charge isolante :

Granulats de xérogel de la société PCAS de conductivité thermique 0.018 Wm⁻¹K⁻¹ < λ < 0.025 Wm⁻¹K⁻¹ et de granulométrie telle que Dmax < 2 cm.

### (c) charge structurante

### (d) Adjuvants :

### (dᵢ) épaississant :

Ether d'amidon modifié de viscosité Brookfield 800 - 1000 mPa.s en suspension à 1% et à 20°C. Opagel®FP9 de la société AVEBE.

Ether d'amidon modifié viscosité brookfield 15000 mPa.s (broche4/ en suspension à 6,8%/ 20°C avec un taux de particules de taille supérieure à 300 µm < 50mg/g. Solvitose® H2060 de la société AVEBE.

### (dᵢᵢ) rétenteur d'eau :

Méthylcellulose modifiée viscosité brookfield 32000-43000 mPa.s (en suspension à 2 %/ 20°C). Culminal® 8366 de la société AQUALON.

### (dᵢᵢᵢ) entraineur d'air :

Oléfine sulfonate de granulométrie telle que les particules de taille inférieure à 100 µm représentent 15-45 % en poids, les particules de taille comprise entre 100 et 180 µm : représentent 20-40 % en poids, et les particules de taille comprise entre 180 et 315 µm représentent de 20-40 % en poids.

### (dᵢᵥ) retardateur de prise :

Tartrate de Na+ K+ : Potassium-Sodium-2,3-Dihydroxysuccinate Tetrahydrate / 1,77 g/cm3

### (dᵥᵢ) Fibres :

Fibres polyamide 6-6 4 mm/2,6 dtex

### -2- Mode opératoire:

* 2 Kg de poudre comprenant le liant (a), la charge structurante (c), les adjuvants (dᵢ) à (dᵥᵢ) sont préparés et mélangés 2 minutes sur mélangeur de laboratoire Guedu (modèle 4.5 NO) de capacité utile 3,5 litres à une vitesse comprise entre 545 et 610 tours/minute.
* Les granulats de xérogel sont pesés à part.
* Les 2Kg de poudre obtenus sont gâchés sur malaxeur de laboratoire Perrier: 30 secondes à une vitesse de 120 tours/minute puis et 1 minute à une vitesse de 60 tours/minute.

### -3- Mesure des propriétés :

* Conductivité thermique λ (W/m.K) : mesure par la méthode du fil chaud sur appareil CT-mètre de la société TELEPH utilisé avec une sonde fil plane de longueur 8 cm placée entre deux éprouvettes prismatiques 14cm x 16cm x 4cm et un temps de chauffe de 180 secondes.
* Résistance en compression Rc en Mpa: mesure sur une demi éprouvette prismatique 4cm x 4cm x 16cm sur presse Perrier avec réglage manuel de la montée en charge suivant NF EN 196-1.
* Résistance en flexion Rf en Mpa: mesure en flexion 3 points sur éprouvettes prismatiques 4cm x 4cm x 16cm sur presse Perrier type 41 suivant NF EN 196-1.
* Densité d du produit durci en Kg/ L mesurée à 28 jours.

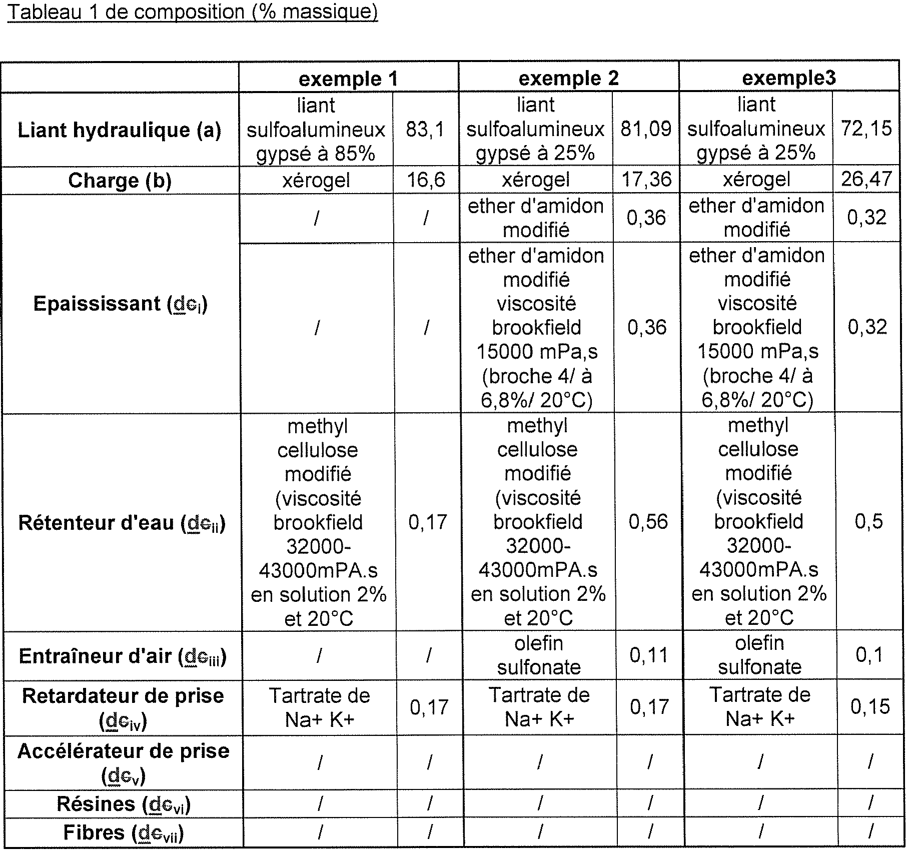

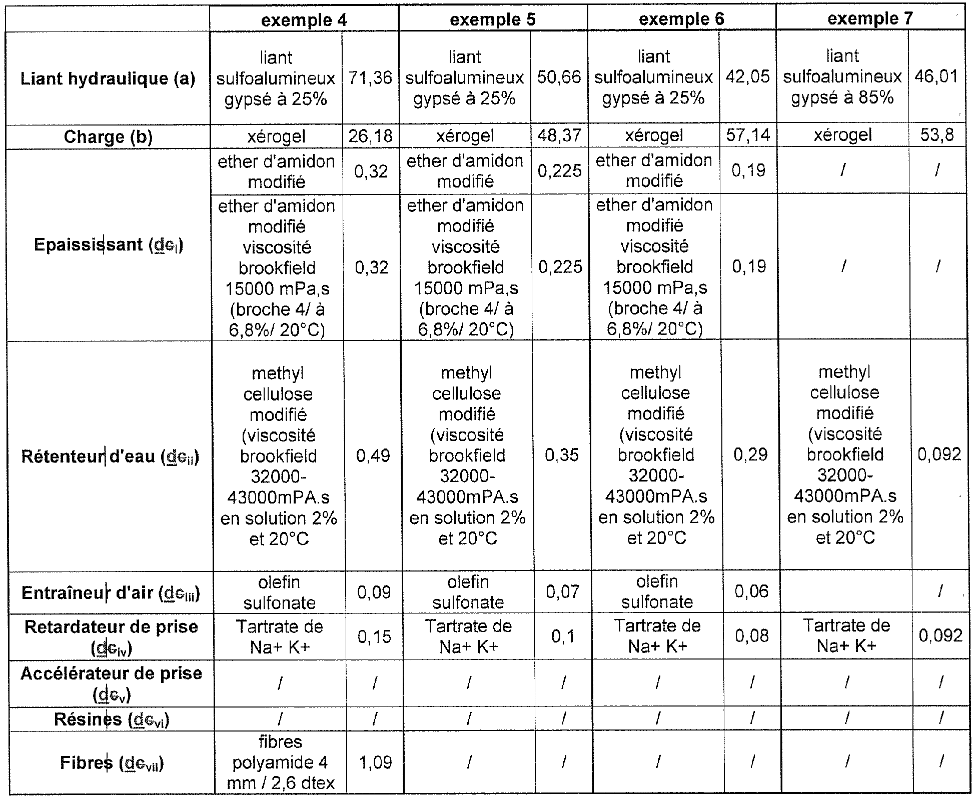

**Tableau 2 récapitulatif des résultats des tests**

| | **exemple 1** | **exemple 2** | **exemple 3** | **exemple 4** | **exemple 5** | **exemple 6** | **exemple 7** |
|---|---|---|---|---|---|---|---|
| **Taux de gâchage (%)** | 55,3 | 73,7 | 72,1 | 92,07 | 75,8 | 118,6 | 116,2 |
| **λ (W/m,K)** | 0,08 | 0,095 | 0,072 | 0,052 | 0,044 | 0,039 | 0,034 |
| **Rc (Mpa)** | 0,52 | 1,52 | 0,63 | 0,67 | 0,23 | 0,15 | 0,08 |
| **Rf (Mpa)** | 0,17 | 0,54 | 0,1 | 0,4 | 0,11 | 0,04 | 0,01 |
| **d produit durci** | 0,49 | 0,55 | 0,45 | 0,31 | 0,22 | 0,18 | 0,2 |

### Conclusion sur les tests :

Les exemples cités montrent que l'on atteint les objectifs que l'on s'était fixé. Pour comparaison, la conductivité thermique d'un enduit monocouche lourd déterminée au fil chaud se situe entre 0.8 et 1 Watt/m.K et celle d'un enduit monocouche semi allégé autour de 0.55 Watt/m.K.
On trouve sur le marché des enduits allégés aux billes de polystyrène dont la conductivité mesurée par cette même méthode est comprise entre 0.07 et 0.12 Watt/m.K et des enduits allégés à la perlite de conductivité annoncée 0.08 W/m.K.
On peut ici viser des conductivités inférieures en conservant des délais de séchage relativement courts.

## Revendications

1. Enduit applicable sur une surface de bâtiment pour réaliser un revêtement isolant thermiquement, cet enduit comprenant de l'eau, du liant (a), une charge isolante (b) comprenant une poudre ou un granulat d'au moins un xérogel de silice hydrophobe obtenu en traitant un organogel de silice avec un agent hydrophobant en présence d'acide et dans un solvant ; en séparant l'organogel hydrophobe obtenu ; et en éliminant le solvant de l'organogel par évaporation, éventuellement une charge structurante (c), et des adjuvants (d), **caractérisé en ce que** la matière sèche a la composition suivante, en % massique, dans l'ordre croissant de préférence pour chaque constituant :
| | |
|---|---|
| (a.1) Liant hydraulique minéral | [0-99]; [45-99]; [48-85]; [50-80] |
| (a.2) Liant organique | [0-99] [1-40]; [1-20]; [2-18]; [5-15] |
| *avec la condition selon laquelle au moins l'un des pourcentages massiques (a.1) & (a.2) est supérieur à 0 ;* | |
| (b) Charge *isolante* | |
| (c) Charge structurante | [060];[0-50];[0-40] |
| (d) Adjuvants | |
| i. Epaississant | [0,1-1,5]; [0,1-1 |
| ii. Rétenteur d'eau | [0,05-2,0]; [0,1-1,0]; [0,15-0,8] |
| iii. Entraîneur d'air | [0,05-0,8]; [0,08-0,4] |
| iv. Retardateur de prise | [0-0,8]; [0-0,4] |
| v. Accélérateur de prise | [0-1,0]; [0-0,8]; [0-0,6] |
| vi. Fibres | [0,1-3,0]; [0,5-2,0]. |

2. Enduit selon l'une au moins des revendications précédentes, **caractérisé en ce que** sa teneur en eau est exprimée par un taux de gâchage, c'est-à-dire un rapport de la masse d'eau introduite sur la masse de matière sèche du liant (a) et de la charge (b), en pourcentage, qui est, dans l'ordre croissant de préférence : [10-300]; [50-200]; [60-100].

3. Enduit selon la revendication 1 ou 2, **caractérisé en ce que** le liant hydraulique minéral (a.1) est choisi dans le groupe comprenant : les ciments alumineux (avantageusement les ciments sulfo-alumineux et les ciments à base d'aluminates de calcium), les ciments Portland, les chaux (avantageusement les chaux aériennes et les chaux hydrauliques), les sulfates de calcium (avantageusement l'anhydrite, le gypse et le plâtre) et leurs mélanges ; les ciments sulfo-alumineux (avantageusement mélangé à du gypse selon un pourcentage massique compris entre 10 et 90% par rapport au mélange) et les ciments alumineux étant préférés, les mélanges ciments sulfo-alumineux/chaux et/ou ciments Portland et les mélanges ciments alumineux à base d'aluminates de calcium /source(s) de sulfate(s)/chaux étant particulièrement préférés.

4. Enduit selon la revendication 1 ou 2, **caractérisé en ce que** le liant organique (a.2) est choisi parmi les résines acryliques et vinyliques, de préférence les résines styrène-acrylique, acrylique, vinyl-acétate d'éthylène, vinyl-acétate/ versatate/ éthylène, et leurs mélanges.

5. Enduit selon l'une au moins des revendications précédentes, **caractérisé en ce que** le pourcentage massique de la charge isolante (b) par rapport à la matière sèche est inférieur ou égal à 60, 50 et 40 dans l'ordre croissant de préférence.

6. Enduit selon l'une au moins des revendications précédentes, **caractérisé en ce que** la charge (b) est obtenue par la voie alcoxysilane à partir de tétraalcoxysilane, (de préférence tétraéthoxysilane) en milieu organique, de manière à produire un organogel traité par un agent hydrophobant choisi parmi les polyalkylsiloxanes, l'hexadiméthylsiloxane étant particulièrement préféré.

7. Enduit selon l'une au moins des revendications précédentes, **caractérisé en ce que** la charge (b) est une poudre ou un granulat de xérogel de silice de granulométrie inférieure ou égale à 2000 µm, de préférence comprise entre 250 et 2000 µm, entre 150 et 500 µm, entre 200 et 250 µm, ou entre 0 et 125 µm, et, plus préférentiellement comprise entre 150 et 500 µm.

8. Enduit selon l'une au moins des revendications précédentes, présentant au moins l'une des caractéristiques suivantes :
- La charge structurante (c) est choisie parmi les charges minérales, de préférence parmi les sables et/ou les fillers ;
- l'épaississant (dᵢ) est choisi parmi les polysaccharides modifiés, de préférence parmi les éthers d'amidons modifiés, les gommes de Welan, les gommes de guar, les gommes de xanthane, les gommes succinoglycane, les alcools polyvinyliques, les polymères polyacrylamide, les sépiolites, les bentonites, et leurs mélanges ;
- le rétenteur d'eau (dᵢᵢ) est choisi parmi : les éthers de cellulose et leurs mélanges, et de préférence dans le groupe comprenant les méthylcelluloses, les méthylhydroxypropylcelluloses, les méthylhydroxyéthyl-celluloses et leurs mélanges, ou parmi les éthers de guar modifiés et leurs mélanges ;
- l'entraîneur d'air (dᵢᵢᵢ) est choisi parmi les tensioactifs et leurs mélanges, de préférence parmi les résines naturelles, les composés sulfatés ou sulfonatés, les détergents synthétiques, les acides gras organiques et leurs mélanges, plus préférentiellement parmi les lignosulfonates, les savons alcalins d'acide(s) gras et leurs mélanges, et, encore plus préférentiellement dans le groupe comprenant les oléfines sulfonates, le dodécyl-sulfate de sodium, le lauryl sulfate de sodium et leurs mélanges ;
- le retardateur de prise (dᵢᵥ) est choisi dans le groupe comprenant l'acide tartrique et ses sels, de préférence les sels de sodium ou de potassium, l'acide citrique et ses sels, de préférence les sels de sodium (citrate trisodique) et leurs mélanges ;
- l'accélérateur de prise (dᵥ) est choisi parmi les carbonates, de préférence de lithium ou de sodium et leurs mélanges ;
- les fibres (dᵥᵢ) comprennent des fibres de polyamide, de polyacrylonitrile, de polyacrylate, de cellulose, de polypropylène, de verre, de sisal, de jute, de chanvre ou de leurs mélanges.

9. Composition sèche pour la préparation d'un enduit applicable sur une surface de bâtiment pour réaliser un revêtement isolant thermiquement, cet enduit comprenant de l'eau, du liant (a), une charge isolante (b) comprenant une poudre ou un granulat d'au moins un aérogel de silice et/ou d'un xérogel de silice hydrophobeobtenu en traitant un organogel de silice avec un agent hydrophobant en présence d'acide et dans un solvant ; en séparant l'organogel hydrophobe obtenu ; et en éliminant le solvant de l'organogel par évaporation, éventuellement une charge structurante (c) et des adjuvants (d), **caractérisé en ce que** la matière sèche a la composition suivante, en % massique, dans l'ordre croissant de préférence pour chaque constituant :
| | |
|---|---|
| (a.1) Liant hydraulique minéral | [0-99]; [45-99]; [48-85]; [50-80] |
| (a.2) Liant organique | [0-99] [1-40]; [1-20]; [2-18]; [5-15] |
| *avec la condition selon laquelle au moins l'un (a.2) est supérieur à 0 ; des pourcentages massiques (a.1) &* | |
| Charge *isolante* | [0,5-65];[5-60];[15-55] |
| Charge structurante | [0-60];[0-50]; [0-40] |
| Adjuvants | |
| i. Epaississant | [0,05-2,0]; [0,1-1,5]; [0,1-1] |
| ii. Rétenteur d'eau | [0,05-2,0]; [0,1-1,0]; [0,15-0,8] |
| iii. Entraîneur d'air | [0,01-1,0]; [0,05-0,8]; [0,08-0,4] |
| iv. Retardateur de prise | [0-1,0]; [0-0,8]; [0-0,4] |
| v. Accélérateur de prise | [0-1,0]; [0-0,8]; [0-0,6]; |
| vi. Fibres | [0-5,0]; [0,1-3,0]; [0,5-2,0]; |
cette composition sèche étant un mélange prêt à l'emploi comprenant :
• soit un monocomposant contenant le liant (a), la charge isolante (b), la charge structurante (c), et tout ou partie des adjuvants (dᵢ) à (dᵥᵢ),
• soit un bicomposant contenant, d'une part, le liant (a), la charge structurante (c) et tout ou partie des adjuvants (dᵢ) à (dᵥᵢ), et, d'autre part, la charge isolante (b).

10. Procédé de préparation de l'enduit selon l'une au moins des revendications 1 à 8, **caractérisé en ce qu'**il consiste essentiellement à mélanger de l'eau à un mélange prêt à l'emploi comprenant le liant (a), éventuellement tout ou partie de la charge isolante (b), la charge structurante (c), les adjuvants (dᵢ) à (dᵥᵢ), le temps de mélange étant de préférence égal à 1 à 30 min, voire 3 à 10 min, la totalité ou le reste de la charge isolante (b) étant ensuite incorporée progressivement dans le mélange si cela n'a pas été fait auparavant.

11. Application par projection sur une surface de bâtiment, de préférence un mur et plus particulièrement un mur de type support monomur en briques ou en béton cellulaire, de l'enduit selon l'une au moins des revendications 1 à 8.

12. Revêtement obtenu par l'application selon la revendication 11, **caractérisé en ce qu'**il présente au moins l'une des propriétés suivantes :
◆ conductivité thermique λ inférieure ou égale à 0,08 W m⁻¹K⁻¹ et de préférence inférieure à 0,065 W m⁻¹K⁻¹,
◆ rétention d'eau supérieure ou égale à 80%, de préférence 90%, et
◆ temps de prise entre 5 et 20 heures, de préférence entre 10 et 14 heures, à 5°C et 30°C, après séchage.

## Patentansprüche

1. Putz, der auf eine Gebäudefläche auftragbar ist, um einen wärmedämmenden Überzug zu bilden, wobei dieser Putz Wasser; Bindemittel (a); einen isolierenden Füllstoff (b), der ein Pulver oder ein Granulat von mindestens einem hydrophoben Silica-Xerogel umfasst, das erhalten wird, indem ein Silica-Organogel in Gegenwart von Säure und in einem Lösungsmittel mit einem hydrophobierenden Mittel behandelt wird, indem das erhaltene hydrophobe Organogel separiert wird und indem das Lösungsmittel durch Verdunsten eliminiert wird; gegebenenfalls einen strukturierenden Füllstoff (c) und Zusatzstoffe (d) umfasst, **dadurch gekennzeichnet, dass** die Trockenmasse die folgende Zusammensetzung in Gew.-% für jeden Bestandteil in aufsteigender Reihenfolge der Präferenz hat:
(a.1) Mineralisches hydraulisches Bindemittel [0-99]; [45-99]; [48-85]; [50-80]
(a.2) Organisches Bindemittel [0-99]; [1-40]; [1-20]; [2-18]; [5-15]
*mit der Bedingung, dass mindestens einer der Gewichtsprozentsätze (a.1) & (a.2) größer als 0 ist;*
(b) Isolierender Füllstoff [0,5-65]; [5-60]; [15-55]
(c) Strukturierender Füllstoff [0-60]; [0-50]; [0-40]
(d) Zusatzstoffe
i. Verdickungsmittel [0,05-2,0]; [0,1-1,5]; [0,1-1]
ii. Wasserretentionsmittel [0,05-2,0]; [0,1-1,0]; [0,15-0,8]
iii. Luftporenbildner [0,01-1,0]; [0,05-0,8]; [0,08-0,4]
iv. Abbindeverzögerer [0-1,0]; [0-0,8]; [0-0,4]
v. Abbindebeschleuniger [0-1,0]; [0-0,8]; [0-0,6]
vi. Fasern [0-5,0]; [0,1-3,0]; [0,5-2,0].

2. Putz nach mindestens einem der vorhergehenden Ansprüche, **dadurch gekennzeichnet, dass** sein Wassergehalt durch ein Anrührverhältnis ausgedrückt wird, das heißt ein Verhältnis der zugegebenen Wassermenge zum Trockenmassegewicht des Bindemittels (a) und des Füllstoffs (b) in Prozent, das in aufsteigender Reihenfolge der Präferenz beträgt: [10-300]; [50-200]; [60-100].

3. Putz nach Anspruch 1 oder 2, **dadurch gekennzeichnet, dass** das mineralische hydraulische Bindemittel (a.1) aus der Gruppe gewählt ist, die umfasst: die Tonerdezemente (vorteilhafterweise die Sulfo-Aluminat-Zemente und die Zemente auf der Basis von Calcium-Aluminaten), die Portland-Zemente, die Kalke (vorteilhafterweise die Luftkalke und die hydraulischen Kalke), die Calciumsulfate (vorteilhafterweise das Anhydrit, den Gips und den Hartgips) und ihre Mischungen; wobei die Sulfo-Aluminat-Zemente (vorteilhafterweise gemischt mit Gips gemäß einem Gewichtsprozentsatz zwischen 10 und 90 % im Verhältnis zur Mischung) und die Tonerdezemente bevorzugt werden, wobei die Mischungen Sulfo-Aluminat-Zemente/Kalk und/oder Portland-Zemente und die Mischungen Tonerdezemente auf der Basis von Calcium-Aluminaten/Sulfatquelle(n)/Kalk besonders bevorzugt werden.

4. Putz nach Anspruch 1 oder 2, **dadurch gekennzeichnet, dass** das organische Bindemittel (a.2) unter den Acryl- und Vinylharzen, bevorzugt den Styrol-Acryl-, Acryl-, Vinyl-Ethylenacetat-, Vinyl-Acetat/Versatat/Ethylen-Harzen und ihren Mischungen gewählt ist.

5. Putz nach mindestens einem der vorhergehenden Ansprüche, **dadurch gekennzeichnet, dass** der Gewichtsprozentsatz des isolierenden Füllstoffs (b) im Verhältnis zur Trockenmasse in aufsteigender Reihenfolge der Präferenz kleiner oder gleich 60, 50 und 40 ist.

6. Putz nach mindestens einem der vorhergehenden Ansprüche, **dadurch gekennzeichnet, dass** der Füllstoff (b) auf dem Alcoxysilan-Weg ausgehend von Tetraalcoxysilan (bevorzugt Tetraethoxysilan) in organischem Milieu erhalten wird, so dass ein Organogel erzeugt wird, das mit einem hydrophobierenden Mittel behandelt wird, das unter den Polyalkylsiloxanen gewählt ist, wobei das Hexadimethylsiloxan besonders bevorzugt wird.

7. Putz nach mindestens einem der vorhergehenden Ansprüche, **dadurch gekennzeichnet, dass** der Füllstoff (b) ein Silica-Xerogel-Pulver oder -Granulat mit einer Korngröße kleiner oder gleich 2000 µm, bevorzugt zwischen 250 und 2000 µm, zwischen 150 und 500 µm, zwischen 200 und 250 µm oder zwischen 0 und 125 µm und noch bevorzugter zwischen 150 und 500 µm ist.

8. Putz nach mindestens einem der vorhergehenden Ansprüche, der mindestens eines der folgenden Merkmale aufweist:
- Der strukturierende Füllstoff (c) ist unter den mineralischen Füllstoffen gewählt, bevorzugt unter den Sanden und/oder Füllern;
- das Verdickungsmittel (dᵢ) ist unter den modifizierten Polysacchariden gewählt, bevorzugt unter den modifizierten Stärkeethern, den Welan-Gummis, den Guar-Gummis, den Xantan-Gummis, den Succinoglycan-Gummis, den Polyvinylalkoholen, den Polyacrylamidpolymern, den Sepioliten, den Bentoniten und ihren Mischungen;
- das Wasserretentionsmittel (dᵢᵢ) ist gewählt unter: den Celluloseethern und ihren Mischungen und bevorzugt aus der Gruppe, welche die Methylcellulosen, die Methylhydroxypropylcellulosen, die Methylhydroxyethylcellulosen und ihre Mischungen umfasst, oder unter den modifizierten Guarethern und ihren Mischungen;
- der Luftporenbildner (dᵢᵢᵢ) ist gewählt unter den Tensiden und ihren Mischungen, bevorzugt unter den natürlichen Harzen, den sulfatierten oder sulfonatierten Verbindungen, den synthetischen Detergenzien, den organischen Fettsäuren und ihren Mischungen, bevorzugter unter den Lignosulfonaten, den alkalischen Seifen von Fettsäure(n) und ihren Mischungen und noch bevorzugter aus der Gruppe, welche die Olefinsulfonate, das Natriumdodecylsulfat, das Natriumlaurylsulfat und ihre Mischungen umfasst;
- der Abbindeverzögerer (dᵢᵥ) ist aus der Gruppe gewählt, welche die Weinsäure und ihre Salze, bevorzugt die Natrium- oder Kaliumsalze, die Zitronensäure und ihre Salze, bevorzugt die Natriumsalze (Natriumcitrat) und ihre Mischungen umfasst;
- der Abbindebeschleuniger (dᵥ) ist unter den Carbonaten, bevorzugt von Lithium oder Natrium, und ihren Mischungen gewählt;
- die Fasern (dᵥᵢ) umfassen Polyamid-, Polyacrylnitril-, Polyacrylat-, Cellulose-, Polypropylen-, Glas-, Sisal-, Jute-, Hanffasern oder ihre Mischungen.

9. Trockene Zusammensetzung zur Zubereitung eines Putzes, der auf eine Gebäudefläche auftragbar ist, um einen wärmedämmenden Überzug zu bilden, wobei dieser Putz Wasser; Bindemittel (a); einen isolierenden Füllstoff (b), der ein Pulver oder ein Granulat von mindestens einem hydrophoben Silica-Aerogel und/oder einem Silica-Xerogel umfasst, das erhalten wird, indem ein Silica-Organogel in Gegenwart von Säure und in einem Lösungsmittel mit einem hydrophobierenden Mittel behandelt wird, indem das erhaltene hydrophobe Organogel separiert wird und indem das Lösungsmittel durch Verdunsten eliminiert wird; gegebenenfalls einen strukturierenden Füllstoff (c) und Zusatzstoffe (d) umfasst, **dadurch gekennzeichnet, dass** die Trockenmasse die folgende Zusammensetzung in Gew.-% für jeden Bestandteil in aufsteigender Reihenfolge der Präferenz hat:
(a.1) Mineralisches hydraulisches Bindemittel [0-99]; [45-99]; [48-85]; [50-80]
(a.2) Organisches Bindemittel [0-99]; [1-40]; [1-20]; [2-18]; [5-15]
*mit der Bedingung, dass mindestens einer der Gewichtsprozentsätze (a.1) & (a.2) größer als 0 ist;* Isolierender Füllstoff [0,5-65]; [5-60]; [15-55] Strukturierender Füllstoff [0-60]; [0-50]; [0-40] Zusatzstoffe
i. Verdickungsmittel [0,05-2,0]; [0,1-1,5]; [0,1-1]
ii. Wasserretentionsmittel [0,05-2,0]; [0,1-1,0]; [0,15-0,8]
iii. Luftporenbildner [0,01-1,0]; [0,05-0,8]; [0,08-0,4]
iv. Abbindeverzögerer [0-1,0]; [0-0,8]; [0-0,4]
v. Abbindebeschleuniger [0-1,0]; [0-0,8]; [0-0,61;
vi. Fasern [0-5,0]; [0,1-3,0]; [0,5-2,0];
wobei diese trockene Zusammensetzung eine gebrauchsfertige Mischung ist, die umfasst:
• entweder eine Monokomponente, die das Bindemittel (a), den isolierenden Füllstoff (b), den strukturierenden Füllstoff (c) und alle oder einen Teil der Zusatzstoffe (dᵢ) bis (dᵥᵢ) enthält,
• oder eine Bikomponente, die zum einen das Bindemittel (a), den strukturierenden Füllstoff (c) und alle oder einen Teil der Zusatzstoffe (dᵢ) bis (dᵥᵢ) und zum anderen den isolierenden Füllstoff (b) enthält.

10. Verfahren zur Zubereitung des Putzes nach mindestens einem der Ansprüche 1 bis 8, **dadurch gekennzeichnet, dass** es im Wesentlichen darin besteht, Wasser mit einer gebrauchsfertigen Mischung zu mischen, die das Bindemittel (a), gegebenenfalls den gesamten oder einen Teil des isolierenden Füllstoffs (b), den strukturierenden Füllstoff (c), die Zusatzstoffe (dᵢ) bis (dᵥᵢ) umfasst, wobei die Mischzeit bevorzugt 1 bis 30 min oder sogar 3 bis 10 min beträgt, wobei der gesamte oder der Rest des isolierenden Füllstoffs (b) anschließend nach und nach in die Mischung eingearbeitet wird, falls dies nicht zuvor erfolgt ist.

11. Spritzauftragen des Putzes nach mindestens einem der Ansprüche 1 bis 8 auf eine Gebäudefläche, bevorzugt eine Mauer und insbesondere eine Mauer aus Poroton Ziegeln oder aus Porenbeton.

12. Überzug, der durch das Auftragen nach Anspruch 11 erhalten wird, **dadurch gekennzeichnet, dass** er mindestens eine der folgenden Eigenschaften aufweist:
• Wärmeleitfähigkeit λ kleiner oder gleich 0,08 W m⁻¹K⁻¹ und bevorzugt kleiner oder gleich ä 0,065 W m⁻¹K⁻¹,
• Wasserretention größer oder gleich 80 %, bevorzugt 90 % und
• Abbindezeit zwischen 5 und 20 Stunden, bevorzugt zwischen 10 und 14 Stunden bei 5 °C und 30 °C, nach Trocknung.

## Claims

1. Render applicable to a surface of a building to produce a thermally insulating coating, said material comprising water; the binder (a); an insulating filler (b) comprising a powder or granules of at least one hydrophobic silica xerogel obtained by treating a silica organogel with a hydrophobizing agent in the presence of acid and in a solvent, isolating the resulting hydrophobic organogel and removing the solvent from the organogel by evaporation; optionally a reinforcing filler (c); and adjuvants (d), **characterized in that** the composition of the dry matter is as follows, in % by mass, in increasing order of preference for each constituent:
| | |
|---|---|
| (a.1) inorganic hydraulic binder | [0-99]; [45-99]; [48-85]; [50-80] |
| (a.2) organic binder | [0-99] [1-40]; [1-20]; [2-18]; [5-15] |
| *with the proviso that at least one of the percentages by mass (a.1) and (a.2) is greater than 0;* | |
| (b) insulating filler | [0.5-65]; [5-60]; [15-55] |
| (c) reinforcing filler | [0-60]; [0-50]; [0-40] |
| (d) adjuvants | |
| i. thickener | [0.05-2.0]; [0.1-1.5]; [0.1-1] |
| ii. water retainer | [0.05-2.0]; [0.1-1.0]; [0.15-0.8] |
| iii. air entrainer | [0.01-1.0]; [0.05-0.8]; [0.08-0.4] |
| iv. setting retarder | [0-1.0]; [0-0.8]; [0-0.4] |
| v. setting accelerator | [0-1.0]; [0-0.8]; [0-0.6] |
| vi. fibres | [0-5.0]; [0.1-3.0]; [0.5-2.0]. |

2. Render according to at least one of the preceding claims, **characterized in that** its water content is expressed by a mixing rate, i.e. a ratio of the mass of water introduced to the mass of dry matter of the binder (a) and of the filler (b), as a percentage, which is in increasing order of preference: [10-300]; [50-200]; [60-100].

3. Render according to Claim 1 or 2, **characterized in that** the inorganic hydraulic binder (a.1) is selected from the group consisting of: high-alumina cements (advantageously sulfoaluminate cements and cements based on calcium aluminates), Portland cements, limes (advantageously air limes and hydraulic limes), calcium sulfates (advantageously anhydrite, gypsum and plaster) and mixtures thereof, preference being given to sulfoaluminate cements (advantageously mixed with gypsum in a percentage by mass of between 10% and 90% relative to the mixture) and high-alumina cements, particular preference being given to mixtures of sulfoaluminate cements with lime and/or Portland cements and mixtures of high-alumina cements based on calcium aluminates with one or more sulfate sources and with lime.

4. Render according to Claim 1 or 2, **characterized in that** the organic binder (a.2) is selected from acrylic and vinyl resins, preferably styrene-acrylic, acrylic, ethylene-vinyl acetate and vinyl acetate/versatate/ethylene resins, and mixtures thereof.

5. Render according to at least one of the preceding claims, **characterized in that** the percentage by mass of the insulating filler (b) relative to the dry matter is less than or equal to 60, 50 and 40 in increasing order of preference.

6. Render according to at least one of the preceding claims, **characterized in that** the filler (b) is obtained by the alkoxysilane route from tetraalkoxysilane (preferably tetraethoxysilane) in organic medium, to produce an organogel, which is treated with a hydrophobizing agent selected from polyalkylsiloxanes, particular preference being given to hexadimethylsiloxane.

7. Render according to at least one of the preceding claims, **characterized in that** the filler (b) is a powder or granules of silica xerogel with a particle size of less than or equal to 2000 µm, preferably of between 250 and 2000 µm, between 150 and 500 µm, between 200 and 250 µm or between 0 and 125 µm, and more preferably of between 150 and 500 µm.

8. Render according to at least one of the preceding claims, having at least one of the following characteristics:
- the reinforcing filler (c) is selected from mineral fillers, preferably from sands and/or filler substances;
- the thickener (dᵢ) is selected from modified polysaccharides, preferably from modified starch ethers, welan gums, guar gums, xanthan gums, succinoglycan gums, polyvinyl alcohols, polyacrylamide polymers, sepiolites, bentonites, and mixtures thereof;
- the water retainer (dᵢᵢ) is selected from: cellulose ethers and mixtures thereof, and preferably from the group consisting of methycelluloses, methylhydroxypropylcelluloses, methylhydroxyethylcelluloses and mixtures thereof, or from modified guar ethers and mixtures thereof;
- the air entrainer (dᵢᵢᵢ) is selected from surfactants and mixtures thereof, preferably from natural resins, sulfate or sulfonate compounds, synthetic detergents, organic fatty acids and mixtures thereof, more preferably from lignosulfonates, alkali metal soaps of fatty acid(s) and mixtures thereof, and more preferably still from the group consisting of olefinsulfonates, sodium dodecyl sulfate, sodium lauryl sulfate and mixtures thereof;
- the setting retarder (dᵢᵥ) is selected from the group encompassing tartaric acid and salts thereof, preferably sodium or potassium salts, citric acid and salts thereof, preferably sodium salts (trisodium citrate), and mixtures thereof;
- the setting accelerator (dᵥ) is selected from carbonates, preferably lithium carbonate or sodium carbonate, and mixtures thereof;
- the fibres (dᵥᵢ) comprise fibres of polyamide, polyacrylonitrile, polyacrylate, cellulose, polypropylene, glass, sisal, jute, hemp, or of mixtures thereof.

9. Dry composition for preparing a render applicable to a surface of a building to produce a thermally insulating coating, said render comprising water; the binder (a); an insulating filler (b) comprising a powder or granules of at least one hydrophobic silica aerogel and/or a silica xerogel obtained by treating a silica organogel with a hydrophobizing agent in the presence of acid and in a solvent, isolating the resulting hydrophobic organogel and removing the solvent from the organogel by evaporation; optionally a reinforcing filler (c); and adjuvants (d), **characterized in that** the composition of the dry matter is as follows, in % by mass, in increasing order of preference for each constituent:
| | |
|---|---|
| (a.1) inorganic hydraulic binder | [0-99]; [45-99]; [48-85]; [50-80] |
| (a.2) organic binder | [0.99] [1-40]; [1-20]; [2-18]; [5-15] |
| *with the proviso that at least one of the percentages by mass (a.1) and (a.2) is greater than 0;* | |
| insulating filler | [0.5-65]; [5-60]; [15-55] |
| reinforcing filler | [0-60]; [0-50]; [0-40] |
| adjuvants | |
| i. thickener | [0.05-2.0]; [0.1-1.5]; [0.1-1] |
| ii. water retainer | [0.05-2.0]; [0.1-1.0]; [0.15-0.8] |
| iii. air entrainer | [0.01-1.0]; [0.05-0.8]; [0.08-0.4] |
| iv. setting retarder | [0-1.0]; [0-0.8]; [0-0.4] |
| v. setting accelerator | [0-1.0]; [0-0.8]; [0-0.6] |
| vi. fibres | [0-5.0]; [0.1-3.0]; [0.5-2.0], |
this dry composition being a ready-to-use mixture comprising:
• either a single component containing the binder (a), the insulating filler (b), the reinforcing filler (c), and some or all of the adjuvants (dᵢ) to (dᵥᵢ),
• or a dual component containing on the one part the binder (a), the reinforcing filler (c) and some or all of the adjuvants (dᵢ) to (dᵥᵢ), and on the other part the insulating filler (b).

10. Process for preparing the render according to at least one of Claims 1 to 8, **characterized in that** it substantially comprises mixing with water a ready-to-use mixture comprising the binder (a), optionally some or all of the insulating filler (b), the reinforcing filler (c) and the adjuvants (dᵢ) to (dᵥᵢ), the mixing time being preferably 1 to 30 min, or even 3 to 10 min, and the entirety or the remainder of the insulating filler (b) being subsequently incorporated gradually into the mixture if this has not been done before.

11. Application by spraying on to a surface of a building, preferably a wall and more particularly a clay block substrate wall or an aerated concrete, of the render according to at least one of Claims 1 to 8.

12. Coating obtained by application according to Claim 11, **characterized in that** it has at least one of the following properties:
◆ thermal conductivity λ less than or equal to 0.08 W m⁻¹K⁻¹ and preferably less than 0.065 W m⁻¹K⁻¹,
◆ water retention greater than or equal to 80%, preferably 90%, and
◆ setting time between 5 and 20 hours, preferably between 10 and 14 hours, at 5°C and 30°C, after drying.
